# EUROPEAN PATENT SPECIFICATION

(11) **EP 2 700 300 B1**
(45) Date of publication and mention of the grant of the patent: **20.09.2017**
(21) Application number: 13397526.8
(22) Date of filing: 02.08.2013
(51) Int. Cl.: A01G 23/083, B27B 25/02

(54) **Feed wheel of a wood handling unit and a feed wheel assembly**
Einzugsrolle einer Holzhandhabungseinheit und Einzugsrollenanordnung
Roue d'alimentation d'une unité de traitement du bois et ensemble roue d'alimentation

(30) Priority: 24.08.2012 FI 20125882
(43) Date of publication of application: 26.02.2014
(73) Proprietor: Waratah OM Oy, 80101 Joensuu (FI)
(72) Inventor: Keskinen, Juho, 33340 Tampere (FI)
(74) Representative: Berggren Oy, Tampere

(56) References cited:
- SE-L- 0 601 205
- US-A- 5 957 177
- US-A1- 2010 313 997

## Description

### Field of the invention

The invention relates to a feed wheel for a wood handling unit. The invention also relates to a feed wheel assembly.

### Background of the invention

Feed wheels of wood handling units of forest machines normally comprise a cylindrical wheel part which is hollow inside and whose outer surface is provided (by working or fastening) with a gripping surface which can comprise gripping elements designed in various ways and configured to penetrate into the outer surface of a tree trunk when tree trunks are moved by the feed wheels. The gripping elements often have a knife-like or claw-like shape, to prevent slipping between the feed wheel and tree trunk. A hub part is provided inside the hollow wheel part, at which hub part the feed wheel is mounted on the drive shaft of an actuator. The hub part is typically provided with a fixing flange or disc, at which it is mounted by screw fastening on the drive shaft of the actuator. Such feed wheels are known e.g. from documents US 5,957,177 and US 2010/0313997 A1. In the handling of trees, the outer surface of the wheel part of the feed wheel touches the outer surface of the tree trunk. Caused by the forces and the friction between the tree trunk and the gripping surface, the gripping elements on the outer surface of the feed wheel are gradually worn, so that the grip provided by the gripping elements is gradually reduced as the service life of the feed wheel becomes longer. Finally, the feed wheel is so worn out that it has to be replaced, among other things because its grip is no longer sufficient for moving tree trunks in a desired way between the delimbing and/or debarking blades of the harvester unit.

In modern effective forestry, trees to be grown in forest land are in most cases of equal age when they become mature for thinning or clear cutting. Therefore, the range of variation in the diameter of trees to be harvested from plantations is usually relatively small. In particular, *e.g.* in the case of eucalyptus forests, the tree trunks are characterized by a diameter with a small range of variation. This is disadvantageous in view of the wear of the feed wheels, because the wearing of feed wheels of forest machines used for harvesting of such forests is concentrated on a small area, due to the small range of variation in the diameter of the trunks. As a result, the service life of the feed wheel becomes shorter than in the case of harvesting of forests in which there is more variation in the diameter of the trunks as the gripping elements of the outer surface of the feed wheel are then worn in a larger area, *i.e.* there is more gripping surface of the feed wheel available for the handling of a given quantity of timber.

For eliminating the above mentioned drawback, reversible feed wheels have been developed on the principle that after the gripping element area corresponding to the typical contact point of trunks mature for harvesting has been worn out, the feed wheel is not replaced but turned around in such a way that that end of the feed wheel which has previously been mounted on the drive shaft of the actuator will, after the reversing, come to the side of the outer edge of the feed wheel, and that end of the feed wheel which has previously been on the side of the outer edge is mounted at the end of the drive shaft of the feeding devices. With such an operation, the contact point between the outer surface of the feed wheel and the tree trunks can in most cases be moved to an almost unused location in the width direction of the outer surface of the feed wheel, and in this way the service life of the feed wheel can usually be almost doubled in comparison with a feed wheel which is not reversible. However, the reversible feed wheels of the state of art have to be designed in such a way that the actuator for rotating the feed wheel can be fitted inside the wheel part of the feed wheel, because otherwise the fastening hub of the feed wheel would come too far from the points of bearing of the drive shaft of the actuator. As a result, the diameter of the feed wheel is limited in such a way that its inner diameter has to be larger than the outer diameter of the actuator. Therefore, the reversible feed wheels of the state of art have normally been harvester unit specific; in other words, there is only a feed wheel of a given size available for each harvester unit and designed to fit it.

### Brief summary of the invention

It is an aim of the invention to introduce a novel feed wheel for a harvester unit, which feed wheel is reversible but where the diameter and the width of the feed wheel can also be selected more freely than before. Furthermore, it is also an aim of the invention to introduce a feed wheel assembly whereby the feed wheel according to the invention can be mounted on a variety of harvester units and thanks to which the diameter and the variation in the width of the feed wheel do not limit its capacity to be mounted on different wood handling units.

The above mentioned technical problem is solved by the feed wheel according to the invention, because its hub part comprises at least two fixing flanges, whereby the fixing flanges can be placed in such a way that the feed wheel can be turned over in such a way that the distance between the fixing point of the feed wheel and the centre of the feed wheel always remains constant. The feed wheel assembly according to the invention comprises such fastening members, by means of which this kind of a feed wheel can be mounted on a variety of actuators, irrespective of the structure of the actuator and/or the drive shaft rotating the actuator of the harvester unit. To put it more precisely, the feed wheel according to the invention is characterized in what will be presented in the characterizing part of claim 1, and the feed wheel assembly according to the invention is characterized in what will be presented in the characterizing part of claim 8. Independent claims 2 to 7 present some advantageous embodiments of the feed wheel according to the invention, and independent claims 9 to 15 present some advantageous embodiments of the feed wheel assembly according to the invention.

The feed wheel according to the invention has the advantage that the feed wheel is reversible and that the feed wheel can be mounted on the drive shaft of the actuator in the harvester unit in such a way that the location of the feed wheel is not changed as a result of the reversal of the feed wheel. Furthermore, thanks to the hub part of the feed wheel, consisting of two or more fixing flanges, it can be easily equipped with an auxiliary hub, by means of which it can be fitted in harvester units equipped with different actuators. The feed wheel assembly according to the invention has the advantage that thanks to it, the end of the drive shaft of the actuators of the reversible feed devices is always fastened inside the feed wheel in such a way that the axial plane of symmetry of the feed wheel always comes to the same location, irrespective of which way around the feed wheel is mounted on the drive shaft. Furthermore, thanks to the feed wheel assembly, a suitable position of the feed wheel is obtained with respect to the tree trunks and the actuators of the feed devices, and thanks to the feed wheel assembly, the diameter and the width of the feed wheel to be mounted in the wood handling unit can vary more than before, because an auxiliary hub can be used in the feed wheel assembly, by means of which hub it is possible to change the fastening point of the feed wheel with respect to the mounting shaft of the actuator.

In a first aspect of the feed wheel according to the invention, the fixing flanges of the feed wheel are, in the axial direction of the wheel part, spaced from the axial plane of symmetry of the wheel part.

In a second aspect of the feed wheel according to the invention, the distances from the outer surface of the two outermost fixing flanges to the axial plane of symmetry are equal.

In a third aspect of the feed wheel according to the invention, the fixing flanges are annular.

In a fourth aspect of the feed wheel according to the invention, the fixing flanges are discoid.

In a fifth aspect of the feed wheel according to the invention, the fixing flanges comprise at least one fastening hole for mounting the feed wheel by screw fastening.

In a sixth aspect of the feed wheel according to the invention, the fastening holes of all the fixing flanges are equally spaced in the fixing flanges and are aligned.

In a first aspect of the feed wheel assembly according to the invention, the fastening elements of the feed wheel comprise an auxiliary hub to be fastened to the fixing flanges of the feed wheel, to which hub the drive shaft of the actuator for rotating the feed wheel can be fastened.

In a second aspect of the feed wheel assembly according to the invention, the auxiliary hub comprises a first flange rim and a second flange rim and an intermediate part between these.

In a third aspect of the feed wheel assembly according to the invention, the diameter of the first flange rim is different from the diameter of the second flange rim, and the intermediate part is configured to extend into the wheel part when the auxiliary hub is fastened to either one of the fixing flanges.

In a fourth aspect of the feed wheel assembly according to the invention, the auxiliary hub comprises first fastening holes in the first flange rim, at which the first flange rim can be fastened to at least one fixing flange of the feed wheel, and the second flange rim comprises second fastening holes, at which the second flange rim can be mounted on the drive shaft of the actuator.

In a fifth aspect of the feed wheel assembly according to the invention, the auxiliary hub comprises reinforcing members between the first flange rim and the second flange rim as well as the intermediate part, for increasing the rigidity and strength of the auxiliary hub.

In a sixth aspect of the feed wheel assembly according to the invention, the fastening elements of the feed wheel, in which the fastening holes of all the fixing flanges are equally spaced in the fixing flanges and are aligned, comprise fixing screws, by means of which the feed wheel can be mounted on the drive shaft of the actuator by fitting the fixing screws through all the fixing flanges of the hub part.

In a seventh aspect of the feed wheel assembly according to the invention, the feed wheel assembly can be one without an auxiliary hub.

### Description of the drawings

In the following, the invention will be described in more detail with reference to the appended drawings, in which
- Fig. 1: shows a side view of a harvester unit, with feed wheels according to the invention mounted on its feeding device,
- Fig. 2: shows the harvester unit of Fig. 1 seen from the front,
- Fig. 3: shows the feed wheel of the harvester unit of Figs. 1 and 2 in a partially cut view from the side,
- Fig. 4: shows an auxiliary hub used for mounting the feed wheel of Fig. 3 in a side view,
- Fig. 5: shows the feed wheel of Fig. 3 in a partially cut side view when the auxiliary hub is fastened to the fastening hub of the feed wheel,
- Fig. 6: shows the feed wheel of Figs. 3 and 5 and the auxiliary hub of Fig. 4 in an exploded slanted view from the side, and
- Fig. 7: shows a slanted side view of the feed wheel of Figs. 3, 5 and 6 and the auxiliary hub of Figs. 4 and 6 mounted on it, the auxiliary hub being fastened to the hub part of the feed wheel.

### Description of some advantageous embodiments of the invention

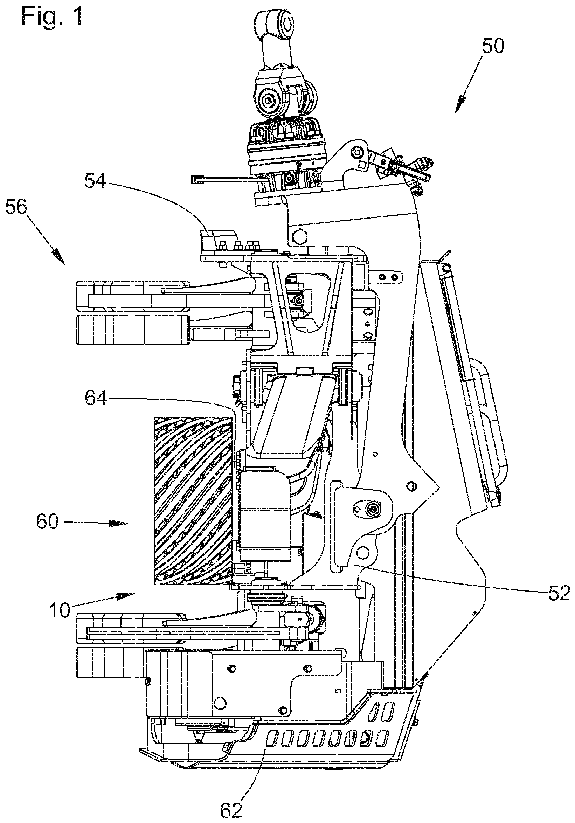

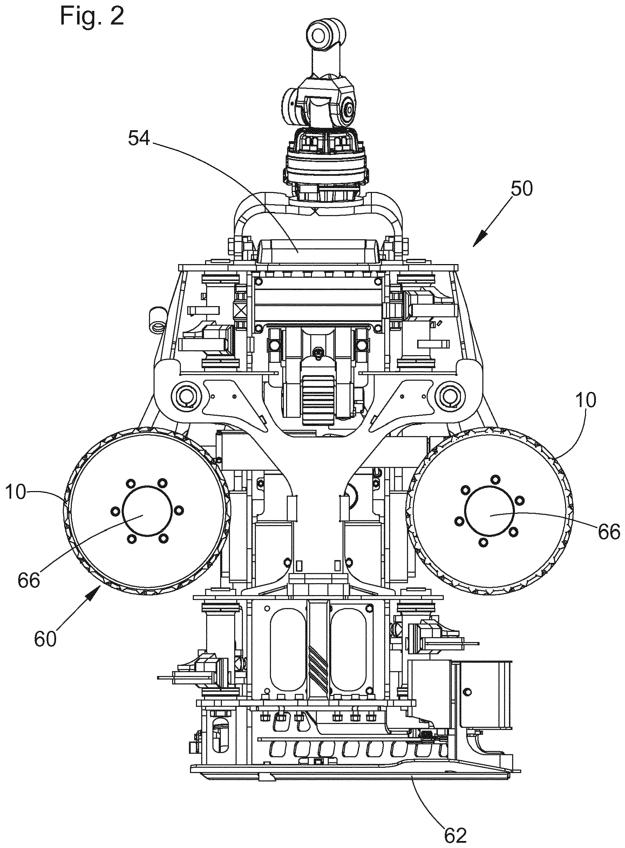

The wood handling unit 50 shown in Figs. 1 and 2 comprises a frame 52, a stationary delimbing blade 54, delimbing blades 56 which are turnable against the tree trunk, a stationary feeding device 58, and feeding devices 60 which are turnable against the tree trunk, as well as a cross-cutting device 62. The feed wheels of the feeding devices 60 which are turnable against the tree trunk are equipped with gripping surfaces which rotate the tree trunks. Consequently, the wood handling unit 50 shown in Figs. 1 and 2 is a harvester unit, by which the tree trunks can be debarked in connection with their delimbing. It could as well be another wood handling unit than a conventional harvester head in which tree trunks are only moved linearly for delimbing by conventional delimbing blades.

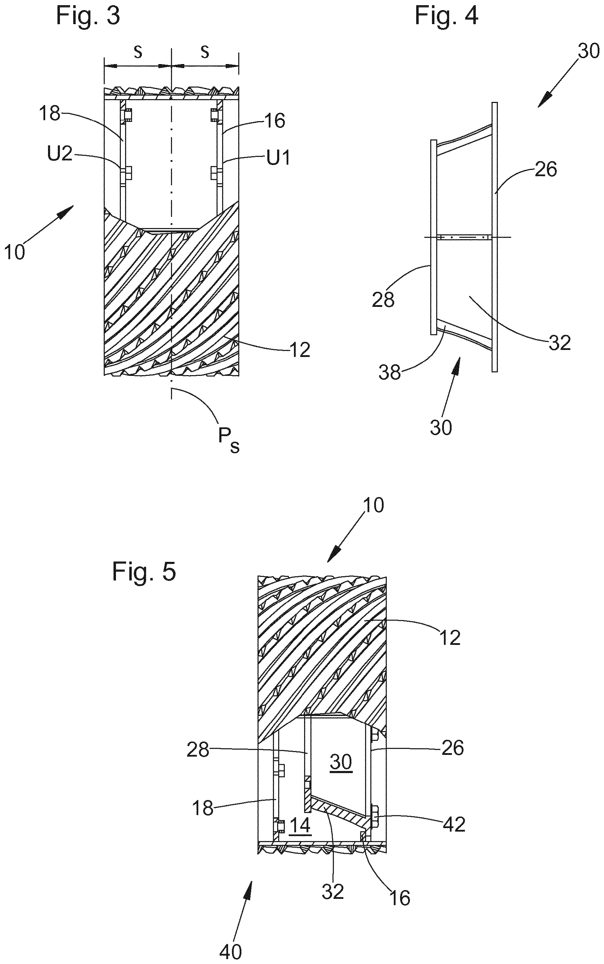

The feeding devices 60 of the wood handling unit 50 shown in Figs. 1 and 2, turnable against the tree trunk, are equipped with feed wheels 10 shown in Figs. 3, 5, 6, and 7 and fastened by auxiliary hubs 30 to be mounted on the drive shafts 66 of the actuators 64 of the turnable feeding devices 60. These auxiliary hubs 30 are shown in more detail in Figs. 4 to 7.

The feed wheels 10 of the turnable feeding devices 60 comprise a wheel part 12 and a hub part 14. In this embodiment, the wheel part 12 is a cylindrical piece made of metal, for example steel. The outer surface of the wheel part 12 comprises a gripping surface with gripping elements which engage the surface of the tree trunk (bark) when the feed wheel is placed against the tree trunk. In Figs. 3 to 7, the gripping surface is designed in such a way that it tends to rotate the trunk with respect to its longitudinal central axis because, as mentioned above, the wood handling unit 50 of Figs. 1 and 2 is designed to both delimb and debark the trunks in connection with their handling.

A hub part 14 is fastened to the inner surface of the wheel part 12. In this embodiment, it consists of two fixing flanges 16 and 18 which are fastened to the central line of the wheel part 12, on both sides of the axial symmetry plane Pₛ. The distances s from the outer surfaces U1 and U2 of both fixing flanges 16 to the axial symmetry plane Pₛ are equal. Thanks to this, the axial symmetry plane Pₛ of the feed wheel 10 is always placed at a constant distance from the fastening point at the end of the drive shaft 66 of the actuator 64 of the wood handling unit 50, irrespective of which way around (that is, at which fastening flange 16 or 18) the feed wheels 10 are mounted on the drive shafts 66 of the actuators 64.

The fixing flanges 16 and 18 of the hub part 14 are equipped with fastening holes 22 at regular intervals, at which holes the feed wheels 10 are intended to be mounted on the drive shafts 66 of the actuators 64. The fixing flanges 16 and 18 are designed in such a way that their inner edge extends at the fastening holes 22 closer to the rotation axis of the feed wheel 10 and, on the other hand, is closer to the inner edge of the wheel part 12 between them; in other words, the fixing flanges are provided with recesses in the areas between the fastening holes 22. The purpose of these recesses is to enable the auxiliary hub 30 used for fastening the feed wheel 10 (and shown e.g. in

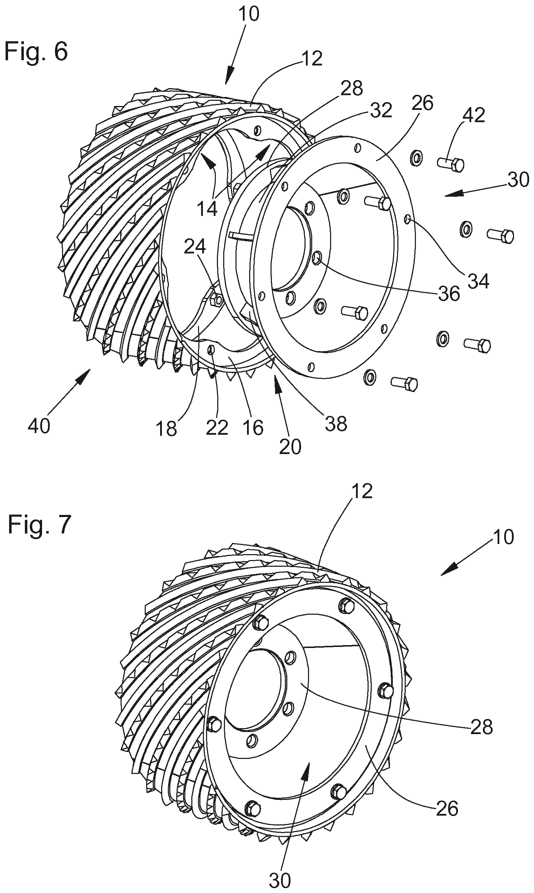

Fig. 4) to be fitted at the centre of the fixing flanges 16 and 18 to their inside as shown in Figs. 5 and 7. The feed wheel 10 shown in Figs. 2, 5, 6, 7 is symmetrical with respect to the axial plane of symmetry Pₛ; in other words, the respective fastening holes 22 of the fixing flanges 16 and 18 are aligned with those in the fixing flange 18 in the direction of the radius and the periphery of the feed wheel 10; that is, the fastening holes are aligned. In this case, they are also regularly spaced in the fastening flanges 16 and 18; that is, the space between two adjacent fastening holes 22 in the direction of the periphery is always the same.

Figures 3, 5, 6, and 7 show how the feed wheel 10 is mounted on the drive shaft 66 of the actuator 64 by means of the auxiliary hub 30 shown in Fig. 4. The auxiliary hub 30 is a piece made of metal, e.g. steel, and comprising a first flange rim 26 and a second flange rim 28, as well as an intermediate part 32 between these. In this embodiment the first flange rim 26 and the second flange rim 28 are annular pieces of a sheet. As shown in Figs. 4 to 7, the first flange rim 26 is clearly larger than the second flange rim 28, in its diameter (both inner and outer diameter). The flange rims 26 and 28 are joined to each other by means of an intermediate part 32 connected to their inner edges. Naturally, because of the different sizes of the flange rims 26 and 28, the intermediate part 32 has to be a piece having a conical shape. Furthermore, reinforcing members 38 are fastened at regular intervals between the first flange rim 26 and the second flange rim 28 as well as the intermediate part 32. Their function is to make the flange rims 26 and 28 fasten to each other and to the intermediate part 32 in a sufficiently rigid and stable way.

The first flange rim 26 is provided with fastening holes 34 at regular intervals as shown in Figs. 6 and 7. These fastening holes 34 can be aligned with the fastening holes 22 in the fixing flanges 16 and 18 of the feed wheel, when the auxiliary hub 30 is fitted inside the feed wheel 10 as shown in Figs. 5 and 7. In a corresponding manner, the second flange rim 28 is provided with fastening holes 36 as well. These fastening holes 36 are placed in the second flange rim 28, in this case at regular intervals, in such a way that they are aligned with fastening holes in the actuator 64 and in the drive shaft 66 (not shown in the figures). Consequently (and as shown in the figures), the first flange rim 26 of the auxiliary hub is intended to be fastened to either one of the fixing flanges 16 or 18 of the feed wheel 10, and the second flange rim 28 to the end of the drive shaft 66 of the actuator 64. Therefore, when the feed wheel 10 is mounted on the drive shaft 66 of the actuator 64, fixing screws 42 shown in Fig. 6 are installed between the fastening holes 34 and 22; and other fastening screws, which are not shown in the figures but which may correspond to e.g. the fastening screws 42, are installed between the fastening holes 36 and the drive shaft 66 of the actuator 64. In this embodiment, the fixing screws 42 and the auxiliary hub 30 constitute auxiliary parts 20 for mounting the feed wheel 10 on the drive shaft of the actuator 64. The auxiliary parts 20 and the feed wheel 10, in turn, constitute a feed wheel assembly 40 which makes it possible to mount the feed wheel 10 on the drive shafts 66 of actuators 64 of feeding devices 60, which can be turned against a tree trunk, of a large variety of wood handling units 50 in such a way that the feed wheel can be turned 180° without changing the distance of the axial plane of symmetry Pₛ with respect to the end of the drive shaft 66.

Thanks to the auxiliary hub 30 of such a feed wheel assembly 40, the end of the drive shaft 66 of the actuators 64 of turnable feeding devices 60 of a harvester unit 50 can be fastened to the side of the free end of the feed wheel 10 with respect to the axial plane of symmetry Pₛ of the feed wheel 10, although that fixing flange 16 of the feed wheel 10, to which the end of the drive shaft 66 is actually mounted, is on the side of the frame of the harvester unit 50 with respect to the axial plane of symmetry Pₛ. As a result, the auxiliary hub 30, in a way, transfers the axial plane of symmetry Pₛ of the feed wheel closer to the bearing points of the drive shaft 66 of the actuator 64. This reduces the bending moment loading caused on the drive shaft 66 of the actuator 64 by the compressive force between the feed wheel 10 and the tree trunk. This will always happen, irrespective of which way around the feed wheel 10 is fastened to the feeding device 60 by means of the turnable auxiliary hub 30, because the fastening of the feed wheel 10 to the first flange rim 26 of the auxiliary hub 30 will always take place at that fixing flange (16 or 18) of the hub part 14 which is on the side of the actuator 64. In other words, the conical intermediate part 32 of the auxiliary part 30, in a way, shifts the fastening point between the feed wheel 10 and the drive shaft by a distance determined by the length of the intermediate part 32 of the auxiliary hub 30 to the inside of the wheel part 12 of the feed wheel 10. As a result, the wheel part 12 is shifted by the length of the intermediate part 32 in the direction of the turnable feeding devices 60 of the harvester unit (*i.e.* in the direction of the frame of the wood handling unit).

The turning of the feed wheel by 180° will cause that the contact point between the gripping surface of the wheel part 12 of the feed wheel 10 and tree trunks of a given size is shifted to the other side of the axial plane of symmetry Pₛ. Only in the case that this contact point, from which the gripping surface on the outer surface of the wheel part 12 of the feed wheel 10 has been worn, falls on the axial plane of symmetry Pₛ sufficiently accurately, can the contact point between the tree trunk and the feed wheel 10 not be shifted to a different location in the width direction of the feed wheel 10 by turning the feed wheel 10. Normally, however, the feed wheel 10 is placed in such a way with respect to the tree trunks that the contact point between it and the trunks falls on the side of the feed wheel 10 that faces the actuator 64, with respect to the axial plane of symmetry Pₛ. As a result, if the diameters of tree trunks to be handled by the harvester unit 50 do not differ significantly from each other, the gripping surface on the outer surface of the wheel part 12 of the feed wheel 10 is only worn on the side facing the actuator 64, with respect to the plane of symmetry Pₛ. Consequently, after the gripping surface of the wheel part 12 has worn out, the feed wheel 10 can be reversed to double its service life with respect to a feed wheel which cannot be reversed in a corresponding way.

When applying the feed wheel assembly 40 shown in Figs. 3 to 7, the mounting of the feed wheels 10 on the drive shafts 66 of the actuators 64 of the turnable feeding devices 60 of the wood handling unit 50 shown in Figs. 1 and 2 is performed by taking the following steps with the feed wheel assemblies 40 of both turnable feeding devices 60:
- mounting the auxiliary hub 30 at its second flange rim 28 on the drive shaft of the actuator 64 of the wood handling unit 50 by means of fixing screws to be fitted through fastening holes 36 in the flange rim 28;
- fitting the feed wheel 10 to the auxiliary hub in such a way that the outer surface of the flange rim 26 of the auxiliary hub is placed against the outer surface of the fixing flange 16 in the way shown in Figs. 5 to 7 and the fastening holes 22 of the fixing flange 16 are aligned with the fastening holes 34 of the flange rim 26;
- fastening the feed wheel 10 to the auxiliary hub 30 by fitting the fixing screws 42 through the holes 22 and 34 and by tightening the fixing flange 16 and the flange rim 26 against each other by means of nuts (not shown in the figures) to be screwed on the fixing screws 42 or by means of a threading in either of the holes.

For changing the point of contact between the feed wheel 10 and the tree trunks, the feed wheels 10 can be turned 180° by taking the following steps on both of the feed wheel assemblies 40 of the turnable feeding device 60:
- unscrewing and removing the fastening screws 42 between the fixing flange 16 of the feed wheel 10 and the first flange rim 26 of the auxiliary hub 30;
- moving the feed wheel 10 outwards so that the intermediate part 32 of the auxiliary hub 30 and the first flange rim 26 come outside the feed wheel 10;
- turning the feed wheel 10 by 180° with respect to its transverse plane of symmetry Pₛ so that instead of the outer surface of the fixing flange 16, the outer surface of the fixing flange 18 can be placed against the first flange rim 26 of the auxiliary hub 30;
- finally, aligning the fastening holes 22 and 34 of the first flange rim 26 and the fixing flange 16, and fastening the parts together by fixing screws 42 fitted through the fastening holes 22 and 34.

The feed wheel and the feed wheel assembly according to the invention may differ in many respects from the example embodiment presented above. For example, the fixing flanges of the hub part may be provided with a variable number of screw holes, and the screw holes do not necessarily need to be spaced at regular intervals or even aligned, as in the above presented example embodiment. When they are aligned, the auxiliary hub can be fastened first to the fixing flange on the side facing the frame of said wood handling unit, by fixing screws extending through all the fixing flanges. In such an embodiment, the feed wheel assembly does not necessarily require an auxiliary hub at all. Thus, the fixing flanges can be discoid, wherein the feed wheel is mounted at the end of the driving shafts of the turnable feeding devices by fixing screws to be fitted through all the fixing flanges. However, this requires that the drive shaft of the actuator does not extend very far from the actuator, because such an application does not have the shifting effect caused by the auxiliary hub towards the actuator of the feed wheel.

In an embodiment similar to those shown in Figs. 3 to 7, the fixing flanges of the feed wheels may only comprise grooves instead of recesses between the fastening holes, in which grooves the reinforcing members of the auxiliary hub can be fitted (in a relatively clearance-free but easily movable way) when the feed wheel and the auxiliary hub are fitted to each other. Such a structure has the advantage that e.g. in an embodiment similar to those of Figs. 3 to 7, it aligns the fastening holes 34 of the first flange rim 26 of the auxiliary hub and the fastening holes 22 of the fixing flanges 16 or 18 when the feed wheel 10 is mounted. In an embodiment, the feed wheel may comprise more than two fixing flanges. The fixing flanges between the outer fixing flanges may have been configured to support the second flange rim or the intermediate part of the auxiliary hub, which further increases the overall rigidity of the structure. In the auxiliary hubs of the feed wheel assembly, the size of the second flange rim to be mounted on the drive shaft of the actuator may be determined according to the diameter of the drive shaft of the actuator, the location of the fastening holes, as well as the outer dimensions of the actuator; in other words, the auxiliary hubs usually have to be specific to the wood handling unit. Consequently, the same feed wheel can be mounted on a different wood handling unit by applying an auxiliary hub suitable for this wood handling unit and said feed wheel for mounting. However, the first flange rim may be of equal size in all the auxiliary hubs, wherein feed wheels of different sizes may be provided with a hub part equipped with fixing flanges having a size suitable for this same auxiliary hub and a hub part equipped with a spacing of fastening holes suitable for this. Such an arrangement has the advantage that only one auxiliary hub is needed for feed wheels of different sizes.

The shape (conicality) of the intermediate part of the auxiliary hub will depend on the difference in the diameters of the first and second flange rims. However, the length of the intermediate part (*i.e.* the axial distance between the flange rims in the axial direction of the feed wheel) may vary from case to case. The suitable length will influence the location (with respect to the axial plane of symmetry of the feed wheel) where the feed wheels of the turnable feeding devices are placed on the tree trunk. Because of this, the suitable length of the intermediate part will also depend on the location of the feeding devices and the other devices of the harvester unit around them.

Furthermore, it is obvious that many other structural features of the feed wheel and the auxiliary hub, including the diameter and width of the feed wheel, and the profile of the gripping surface of the wheel part, and the materials used in them, may vary. The feed wheel, as well as the auxiliary hub, may be a uniform piece consisting of separate parts joined together, or a single casting. Consequently, the feed wheel according to the invention, the auxiliary hub, and the feed wheel assembly formed by them are not limited to the above presented embodiment examples but may vary within the scope of the appended claims.

## Claims

1. A feed wheel (10) for a wood handling unit (50), comprising a hollow cylindrical wheel part (12) and a hub part (14), **characterized in that** the hub part (14) comprises at least two fixing flanges (16, 18) fixed inside the wheel part (12), at least partly spaced from each other.

2. The feed wheel (10) according to claim 1 for a harvester unit, **characterized in that** the fixing flanges (16, 18) are, in the axial direction of the wheel part (12), spaced by a distance (s) from the axial plane of symmetry (Pₛ) of the wheel part (12).

3. The feed wheel (10) according to claim 2 for a harvester unit, **characterized in that** the distances (s) from the outer surfaces (U1, U2) of the two outermost fixing flanges (16, 18) to the axial plane of symmetry (Pₛ) are equal.

4. The feed wheel (10) according to any of the claims 1 to 3 for a harvester unit, **characterized in that** the fixing flanges (16, 18) are annular.

5. The feed wheel (10) according to any of the claims 1 to 3 for a harvester unit, **characterized in that** the fixing flanges (16, 18) are discoid.

6. The feed wheel (10) according to any of the claims 1 to 5 for a harvester unit, **characterized in that** the fixing flanges (16, 18) comprise at least one fastening hole (22, 24) for mounting the feed wheel (10) by screw fastening.

7. The feed wheel (10) according to claim 6 for a harvester unit, **characterized in that** the fastening holes (22, 24) of all the fixing flanges (16, 18) are equally spaced in the fixing flanges (16, 18) and are aligned.

8. A feed wheel assembly (40) comprising a feed wheel (10) and fastening elements for mounting the feed wheel (10) on the drive shaft of an actuator, **characterized in that** the feed wheel (10) is a feed wheel (10) according to any of the claims 1 to 5.

9. The feed wheel assembly (40) according to claim 8, **characterized in that** the fastening elements comprise an auxiliary hub (30) to be fastened to the fixing flanges (16, 18) of the feed wheel (10), to which hub (30) the drive shaft (66) of the actuator (64) for rotating the feed wheel (10) can be fastened.

10. The feed wheel assembly (40) according to claim 9, **characterized in that** the auxiliary hub (30) comprises a first flange rim (26) and a second flange rim (28) and an intermediate part (32) between these.

11. The feed wheel assembly (40) according to claim 10, **characterized in that** the diameter of the first flange rim (26) is different from the diameter of the second flange rim (28), and the intermediate part (32) is configured to extend into the wheel part (12) when the auxiliary hub (30) is fastened to either one of the fixing flanges (16, 18).

12. The feed wheel assembly (40) according to claim 10 or 11, **characterized in that** the auxiliary hub (30) comprises first fastening holes (34) in the first flange rim (26), at which holes the first flange rim (26) can be fastened to at least one fixing flange (16, 18) of the feed wheel (10), and the second flange rim (28) comprises second fastening holes (36), at which holes the second flange rim (28) can be fastened to the drive shaft (66) of the actuator.

13. The feed wheel assembly (40) according to any of the claims 10 to 12, **characterized in that** the auxiliary hub (30) comprises reinforcing members (38) between the first flange rim (26) and the second flange rim (28) as well as the intermediate part (32), for increasing the rigidity and strength of the auxiliary hub (30).

14. The feed wheel assembly (40) according to claim 8, **characterized in that** the feed wheel (10) is a feed wheel according to claim 7, and that the fastening elements comprise fixing screws (42) by means of which the feed wheel (10) can be mounted on the drive shaft of the actuator by fitting the fixing screws (42) through all the fixing flanges (16, 18) of the hub part (14).

15. The feed wheel assembly (40) according to claim 14, **characterized in that** the feed wheel assembly (40) does not comprise an auxiliary hub (30).

## Patentansprüche

1. Ein Zuführrad (10) für eine Holzhandhabungseinheit (50), das ein hohles zylindrisches Radteil (12) und ein Nabenteil (14) aufweist, **dadurch gekennzeichnet, dass** das Nabenteil (14) mindestens zwei Befestigungsflansche (16, 18) aufweist, die innerhalb des Radteils (12) mindestens teilweise voneinander beabstandet befestigt sind.

2. Zuführrad (10) gemäß Anspruch 1 für eine Ernteeinheit, **dadurch gekennzeichnet, dass** die Befestigungsflansche (16, 18) in der axialen Richtung des Radteils (12) in einem Abstand (s) von der axialen Symmetrieebene (Pₛ) des Radteils (12) beabstandet sind.

3. Zuführrad (10) gemäß Anspruch 2 für eine Ernteeinheit, **dadurch gekennzeichnet, dass** die Abstände (s) von den Außenflächen (U1, U2) der zwei äußersten Befestigungsflansche (16, 18) zur axialen Symmetrieachse (Pₛ) gleich sind.

4. Zuführrad (10) gemäß einem der Ansprüche 1 bis 3 für eine Ernteeinheit, **dadurch gekennzeichnet, dass** die Befestigungsflansche (16, 18) ringförmig sind.

5. Zuführrad (10) gemäß einem der Ansprüche 1 bis 3 für eine Ernteeinheit, **dadurch gekennzeichnet, dass** die Befestigungsflansche (16, 18) scheibenförmig sind.

6. Zuführrad (10) gemäß einem der Ansprüche 1 bis 5 für eine Ernteeinheit, **dadurch gekennzeichnet, dass** die Befestigungsflansche (16, 18) mindestens ein Befestigungsloch (22, 24) zum Befestigen des Zuführrads (10) mittels Schraubenbefestigung aufweisen.

7. Zuführrad (10) gemäß Anspruch 6 für eine Ernteeinheit, **dadurch gekennzeichnet, dass** die Befestigungslöcher (22, 24) aller Befestigungsflansche (16, 18) in den Befestigungsflanschen (16, 18) gleich beabstandet und ausgerichtet sind.

8. Eine Zuführradanordnung (40), die ein Zuführrad (10) und Befestigungselemente zum Befestigen des Zuführrads (10) an der Antriebswelle eines Antriebsglieds aufweist, **dadurch gekennzeichnet, dass** das Zuführrad (10) ein Zuführrad (10) gemäß einem der Ansprüche 1 bis 5 ist.

9. Zuführradanordnung (40) gemäß Anspruch 8, **dadurch gekennzeichnet, dass** die Befestigungselemente eine Hilfsnabe (30) zur Befestigung an den Befestigungsflanschen (16, 18) des Zuführrads (10) aufweist, wobei an der Nabe (30) die Antriebswelle (66) des Antriebsglieds (64) zum Drehen des Zuführrads (10) befestigt werden kann.

10. Zuführradanordnung (40) gemäß Anspruch 9, **dadurch gekennzeichnet, dass** die Hilfsnabe (30) einen ersten Flanschrand (26) und einen zweiten Flanschrand (28) und ein Zwischenteil (32) zwischen diesen aufweist.

11. Zuführradanordnung (40) gemäß Anspruch 10, **dadurch gekennzeichnet, dass** sich der Durchmesser des ersten Flanschrandes (26) vom Durchmesser des zweiten Flanschrandes (28) unterscheidet, und das Zwischenteil (32) so konfiguriert ist, dass es sich in das Radteil (12) erstreckt, wenn die Hilfsnabe (30) an jeweils einem der Befestigungsflansche (16, 18) befestigt ist.

12. Zuführradanordnung (40) gemäß Anspruch 10 oder 11, **dadurch gekennzeichnet, dass** die Hilfsnabe (30) erste Befestigungslöcher (34) in dem ersten Flanschrand (26) aufweist, wobei an den Löchern der erste Flanschrand (26) an mindestens einem Befestigungsflansch (16, 18) des Zuführrads (10) befestigt werden kann, und der zweite Flanschrand (28) zweite Befestigungslöcher (36) aufweist, wobei an den Löchern der zweite Flanschrand (28) an der Antriebswelle (66) des Antriebsglieds befestigt werden kann.

13. Zuführradanordnung (40) gemäß einem der Ansprüche 10 bis 12, **dadurch gekennzeichnet, dass** die Hilfsnabe (30) Verstärkungselemente (38) zwischen dem ersten Flanschrand (26) und dem zweiten Flanschrand (28) sowie das Zwischenteil (32) aufweist, zur Erhöhung der Steifigkeit und Festigkeit der Hilfsnabe (30).

14. Zuführradanordnung (40) gemäß Anspruch 8, **dadurch gekennzeichnet, dass** das Zuführrad (10) ein Zuführrad gemäß Anspruch 7 ist, und dass die Befestigungselemente Feststellschrauben (42) aufweisen, mit Hilfe derer das Zuführrad (10) an der Antriebswelle des Antriebsglieds befestigt werden kann, indem die Feststellschrauben (42) durch alle Befestigungsflansche (16, 18) des Nabenteils (14) eingesetzt werden.

15. Zuführradanordnung (40) gemäß Anspruch 14, **dadurch gekennzeichnet, dass** die Zuführranordnung (40) keine Hilfsnabe (30) aufweist.

## Revendications

1. Roue d'alimentation (10) pour une unité de traitement du bois (50), comprenant une partie roue cylindrique creuse (12) et une partie moyeu (14),
**caractérisée en ce que** la partie moyeu (14) comprend au moins deux brides de fixation (16, 18) fixées à l'intérieur de la partie roue (12), au moins partiellement espacées l'une par rapport à l'autre.

2. Roue d'alimentation (10) selon la revendication 1, destinée à une unité de récolte,
**caractérisée en ce que** les brides de fixation (16, 18) sont, dans la direction axiale de la partie roue (12), espacées à raison d'une distance (s) par rapport au plan axial de symétrie (Pₛ) de la partie roue (12).

3. Roue d'alimentation (10) selon la revendication 2, destinée à une unité de récolte,
**caractérisée en ce que** la ou les distance (s) par rapport aux surfaces extérieures (U1, U2) des deux brides de fixation les plus extérieures (16, 18) par rapport au plan axial de symétrie (Pₛ) sont égales.

4. Roue d'alimentation (10) selon l'une quelconque des revendications 1 à 3, destinée à une unité de récolte,
**caractérisée en ce que** les brides de fixation (16, 18) sont annulaires.

5. Roue d'alimentation (10) selon l'une quelconque des revendications 1 à 3, destinée à une unité de récolte,
**caractérisée en ce que** les brides de fixation (16, 18) sont discoïdes.

6. Roue d'alimentation (10) selon l'une quelconque des revendications 1 à 5, destinée à une unité de récolte,
**caractérisée en ce que** les brides de fixation (16, 18) comprennent au moins un trou d'assemblage (22, 24) permettant de monter la roue d'alimentation (10) par vissage.

7. Roue d'alimentation (10) selon la revendication 6, destinée à une unité de récolte,
**caractérisée en ce que** les trous d'assemblage (22, 24) de toutes les brides de fixation (16, 18) sont espacés de manière égale au sein des brides de fixation (16, 18) et sont alignés.

8. Ensemble formant roue d'alimentation (40), comprenant une roue d'alimentation (10) et des éléments d'assemblage permettant de monter la roue d'alimentation (10) sur l'arbre d'entraînement d'un actionneur,
**caractérisé en ce que** la roue d'alimentation (10) est une roue d'alimentation (10) selon l'une quelconque des revendications 1 à 5.

9. Ensemble formant roue d'alimentation (40) selon la revendication 8,
**caractérisé en ce que** les éléments d'assemblage comprennent un moyeu auxiliaire (30) à assembler sur les brides de fixation (16, 18) de la roue d'alimentation (10), l'arbre d'entraînement (66) de l'actionneur (64), qui permet de faire tourner la roue d'alimentation (10), pouvant être assemblée sur ledit moyeu (30).

10. Ensemble formant roue d'alimentation (40) selon la revendication 9,
**caractérisé en ce que** le moyeu auxiliaire (30) comprend un premier rebord de bride (26) et un deuxième rebord de bride (28) et une partie intermédiaire (32) entre ceux-ci.

11. Ensemble formant roue d'alimentation (40) selon la revendication 10,
**caractérisé en ce que** le diamètre du premier rebord de bride (26) est différent du diamètre du deuxième rebord de bride (28), et la partie intermédiaire (32) est configurée pour s'étendre jusque dans la partie roue (12) lorsque le moyeu auxiliaire (30) est assemblé sur l'une ou l'autre des brides de fixation (16, 18).

12. Ensemble formant roue d'alimentation (40) selon la revendication 10 ou 11,
**caractérisé en ce que** le moyeu auxiliaire (30) comprend des premiers trous d'assemblage (34) au sein du premier rebord de bride (26), le premier rebord de bride (26) pouvant être assemblé sur au moins une bride de fixation (16, 18) de la roue d'alimentation (10) au niveau desdits trous, et le deuxième rebord de bride (28) comprend des deuxièmes trous d'assemblage (36), le deuxième rebord de bride (28) pouvant être assemblé sur l'arbre d'entraînement (66) de l'actionneur au niveau desdits trous.

13. Ensemble formant roue d'alimentation (40) selon l'une quelconque des revendications 10 à 12,
**caractérisé en ce que** le moyeu auxiliaire (30) comprend des éléments de renfort (38) entre le premier rebord de bride (26) et le deuxième rebord de bride (28) ainsi que la partie intermédiaire (32), afin d'augmenter la rigidité et la solidité du moyeu auxiliaire (30).

14. Ensemble formant roue d'alimentation (40) selon la revendication 8,
**caractérisé en ce que** la roue d'alimentation (10) est une roue d'alimentation selon la revendication 7, et les éléments d'assemblage comprennent des vis de fixation (42) au moyen desquelles la roue d'alimentation (10) peut être montée sur l'arbre d'entraînement de l'actionneur par mise en place des vis de fixation (42) à travers la totalité des brides de fixation (16, 18) de la partie moyeu (14).

15. Ensemble formant roue d'alimentation (40) selon la revendication 14,
**caractérisé en ce que** l'ensemble formant roue d'alimentation (40) ne comprend pas un moyeu auxiliaire (30).
